(19) Europäisches Patentamt
European Patent Office
Office européen des brevets

(11) **EP 4 212 587 B1**

(12) **EUROPEAN PATENT SPECIFICATION**

(45) Date of publication and mention of the grant of the patent:
**25.09.2024 Bulletin 2024/39**

(21) Application number: **21940029.8**

(22) Date of filing: **26.11.2021**

(51) International Patent Classification (IPC):
**C08L 67/02** (2006.01)     **C08L 55/02** (2006.01)
**C08L 25/12** (2006.01)     **C08L 35/04** (2006.01)
**C08K 5/20** (2006.01)

(52) Cooperative Patent Classification (CPC):
(C-Sets available)
**C08L 67/02; C08K 5/20; C08L 25/12; C08L 35/04;**
**C08L 55/02;** C08L 2205/035          (Cont.)

(86) International application number:
**PCT/KR2021/017647**

(87) International publication number:
**WO 2023/095963 (01.06.2023 Gazette 2023/22)**

(54) **THERMOPLASTIC RESIN COMPOSITION, METHOD FOR PRODUCING SAME, AND MOLDED ARTICLE INCLUDING SAME**

THERMOPLASTISCHE HARZZUSAMMENSETZUNG, VERFAHREN ZUR HERSTELLUNG DAVON UND FORMARTIKEL DAMIT

COMPOSITION DE RÉSINE THERMOPLASTIQUE, PROCÉDÉ DE PRODUCTION ASSOCIÉ, ET ARTICLE MOULÉ LA CONTENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.07.2023 Bulletin 2023/29**

(73) Proprietor: **LG CHEM, LTD.**
**Yeongdeungpo-gu,**
**Seoul 07336 (KR)**

(72) Inventors:
• **KO, Gun**
  **34122 Daejeon (KR)**
• **KWON, Tae Hun**
  **34122 Daejeon (KR)**
• **HWANG, Hee Jae**
  **34122 Daejeon (KR)**
• **PARK, Jae Chan**
  **34122 Daejeon (KR)**
• **KIM, Yong**
  **34122 Daejeon (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**EP-A1- 2 955 204          JP-A- 2006 117 721**
**KR-A- 20120 075 085      KR-A- 20150 067 691**
**KR-A- 20150 078 316      KR-A- 20190 034 800**
**KR-A- 20220 012 639**

(52) Cooperative Patent Classification (CPC): (Cont.)

C-Sets
**C08L 67/02, C08K 5/20, C08L 25/12, C08L 35/06,
C08L 55/02**

**Description**

[Technical Field]

The present invention relates to a thermoplastic resin composition, a method of preparing the same, and a molded article including the same. More particularly, the present invention relates to a thermoplastic resin composition having excellent heat resistance, chemical resistance, light resistance, and noise resistance while maintaining mechanical properties equal or superior to those of conventional heat-resistant ABS resin compositions, having great advantages in terms of economics, and thus, being suitable for automotive interior materials due to these advantageous features; a method of preparing the thermoplastic resin composition; and a molded article including the thermoplastic resin composition.

[Background Art]

ABS resin is an acrylonitrile-butadiene-styrene terpolymer, and has excellent impact resistance, rigidity, chemical resistance, and processability. Thus, ABS resin is used in various fields such as electrical/electronic products, architecture, and automobiles. However, since ABS resin lacks heat resistance compared to engineering plastics, the use of ABS resin is limited for parts of electric/electronic products and automotive interior materials that require heat resistance.

PC/ABS materials are widely used in various applications such as automobiles and electric/electronic products due to excellent mechanical properties and economics thereof. In the case of automobiles, PC/ABS materials are mainly used for automotive interior materials, such as center fascia and door trim. However, since PC/ABS materials have weak chemical resistance due to amorphous nature thereof, the use of PC/ABS materials is limited. In particular, environmental stress cracking (ESC) of automotive interior materials induced by chemical products is a chronic and serious quality problem. Accordingly, there is an increasing demand for a chemical-resistant material capable of preventing cracks caused by chemicals frequently used in automobiles.

Therefore, there is a need to develop a material having excellent heat resistance and chemical resistance while maintaining mechanical properties, chemical resistance, light resistance, and noise resistance equal or superior to those of existing materials used for automotive interior materials.

[Related Art Documents]

[Patent Documents]

KR 10-00334710000 B1

EP 2 955 204 A1 discloses a thermoplastic resin composition comprising a polyester resin, a vinyl cyanide compound-conjugated diene compound-aromatic vinyl compound graft copolymer, a styrene-vinyl cyanide-maleic anhydride compound copolymer and a maleimide-based polymer and an amide-based lubricant. Further disclosed is a thermoplastic resin composition comprising a polyester resin, a vinyl cyanide compound-conjugated diene compound-aromatic vinyl compound graft copolymer and an α-methyl-styrene-vinyl cyanide compound copolymer.

[Disclosure]

[Technical Problem]

Therefore, the present invention has been made in view of the above problems, and it is one object of the present invention to provide a thermoplastic resin composition having excellent heat resistance, chemical resistance, light resistance, and noise resistance while maintaining mechanical properties equal or superior to those of conventional heat-resistant ABS resin compositions, having great advantages in terms of economics, and thus, being suitable for automotive interior materials due to these advantageous features.

It is another object of the present invention to provide a method of preparing the thermoplastic resin composition.

It is yet another object of the present invention to provide a molded article including the thermoplastic resin composition.

The above and other objects can be accomplished by the present invention described below.

[Technical Solution]

In accordance with one aspect of the present invention, provided is a thermoplastic resin composition including a polyester resin (A), a vinyl cyanide compound-conjugated diene compound-aromatic vinyl compound graft copolymer (B), an alpha-methylstyrene-vinyl cyanide compound copolymer (C), a maleimide-based polymer (D), and an amide-based lubricant (E).

In accordance with another aspect of the present invention, provided is a thermoplastic resin composition including a polyester resin (A), a vinyl cyanide compound-conjugated diene compound-aromatic vinyl compound graft copolymer (B), an alpha-methylstyrene-vinyl cyanide compound copolymer (C), a maleimide-based polymer (D), and an amide-based lubricant (E), wherein the thermoplastic resin composition includes 20 to 40 % by weight of the polyester resin (A), 15 to 30 % by weight of the vinyl cyanide compound-conjugated diene compound-aromatic vinyl compound graft copolymer (B), 20 to 35 % by weight of the alpha-methylstyrene-vinyl cyanide compound copolymer (C), 10 to 20 % by weight of the maleimide-based polymer (D), or 0.1 to 5 % by weight of the amide-based lubricant (E).

In accordance with still another aspect of the present invention, provided is a thermoplastic resin composition including 20 to 40 % by weight of a polyester resin (A); 15 to 30 % by weight of a vinyl cyanide compound-conjugated diene compound-aromatic vinyl compound graft copolymer (B); 20 to 35 % by weight of an alpha-methylstyrene-vinyl cyanide compound copolymer (C); 10 to 20 % by weight of a maleimide-based polymer (D); and 0.1 to 5 % by weight of an amide-based lubricant (E).

In accordance with still another aspect of the present invention, provided is a thermoplastic resin composition including 20 to 40 % by weight of a polyester resin (A) having an intrinsic viscosity of 1.1 dl/g or more; 15 to 30 % by weight of a vinyl cyanide compound-conjugated diene compound-aromatic vinyl compound graft copolymer (B); 20 to 35 % by weight of an alpha-methylstyrene-vinyl cyanide compound copolymer (C); 10 to 20 % by weight of a maleimide-based polymer (D); and 0.1 to 5 % by weight of a lubricant (E), wherein a weight of the polyester resin (A) is not less than a weight of the vinyl cyanide compound-conjugated diene compound-aromatic vinyl compound graft copolymer (B).

In accordance with still another aspect of the present invention, provided is a method of preparing a thermoplastic resin composition, the method including melt-kneading and extruding a polyester resin (A), a vinyl cyanide compound-conjugated diene compound-aromatic vinyl compound graft copolymer (B), an alpha-methylstyrene-vinyl cyanide compound copolymer (C), a maleimide-based polymer (D), and an amide-based lubricant (E) at 200 to 300 °C.

In accordance with still another aspect of the present invention, provided is a method of preparing a thermoplastic resin composition, the method including melt-kneading and extruding a polyester resin (A), a vinyl cyanide compound-conjugated diene compound-aromatic vinyl compound graft copolymer (B), an alpha-methylstyrene-vinyl cyanide compound copolymer (C), a maleimide-based polymer (D), and an amide-based lubricant (E) at 200 to 300 °C, wherein the thermoplastic resin composition includes 20 to 40 % by weight of the polyester resin (A), 15 to 30 % by weight of the vinyl cyanide compound-conjugated diene compound-aromatic vinyl compound graft copolymer (B), 20 to 35 % by weight of the alpha-methylstyrene-vinyl cyanide compound copolymer (C), 10 to 20 % by weight of the maleimide-based polymer (D), or 0.1 to 5 % by weight of the amide-based lubricant (E).

In accordance with still another aspect of the present invention, provided is a method of preparing a thermoplastic resin composition, the method including melt-kneading and extruding 20 to 40 % by weight of a polyester resin (A); 15 to 30 % by weight of a vinyl cyanide compound-conjugated diene compound-aromatic vinyl compound graft copolymer (B); 20 to 35 % by weight of an alpha-methylstyrene-vinyl cyanide compound copolymer (C); 10 to 20 % by weight of a maleimide-based polymer (D); and 0.1 to 5 % by weight of an amide-based lubricant (E) at 200 to 300 °C.

In accordance with still another aspect of the present invention, provided is a molded article including the thermoplastic resin composition.

Provided is a method of manufacturing a molded article, the method including melt-kneading and extruding 20 to 40 % by weight of a polyester resin (A); 15 to 30 % by weight of a vinyl cyanide compound-conjugated diene compound-aromatic vinyl compound graft copolymer (B); 20 to 35 % by weight of an alpha-methylstyrene-vinyl cyanide compound copolymer (C); 10 to 20 % by weight of a maleimide-based polymer (D); and 0.1 to 5 % by weight of an amide-based lubricant (E) at 200 to 300 °C to prepare pellets and injecting the prepared pellets using an injection machine, wherein, when injection metering deviations of 30 shots are measured at an injection temperature of 230 °C and a mold temperature of 50 °C using a 600MT injection machine, the molded article has a standard deviation of injection metering deviations of 2.4 or less or an average value of injection metering deviations of 18.3 or less.

Further embodiments are disclosed in the dependent claims.

[Advantageous effects]

The present invention has an effect of providing a thermoplastic resin composition having excellent heat resistance, chemical resistance, light resistance, and noise resistance while maintaining mechanical properties equal or superior to those of conventional heat-resistant ABS resin compositions, having great advantages in terms of economics, and thus, being suitable for automotive interior materials due to these advantageous features; a method of preparing the thermoplastic resin composition; and a molded article including the thermoplastic resin composition.

[Description of Drawings]

FIG. 1 schematically shows a method of measuring environmental stress cracking (ESC), which is an index of chemical resistance.

FIG. 2 schematically shows a method of measuring friction noise properties, which are an index of noise resistance.

[Best mode]

Hereinafter, a thermoplastic resin composition, a method of preparing the same, and a molded article including the same according to the present invention will be described in detail.

The present inventors confirmed that, when a polyester resin, a vinyl cyanide compound-conjugated diene compound-aromatic vinyl compound graft copolymer, an alpha-methylstyrene-vinyl cyanide compound copolymer, a maleimide-based polymer, and an amide-based lubricant were included in a predetermined composition ratio, and the content of the polyester resin was the largest thereamong, compared to conventional heat-resistant ABS resin compositions, economics was excellent, mechanical properties were maintained at a certain level or more, and heat resistance, chemical resistance, light resistance, and noise resistance required for automotive interior materials were improved. Based on these results, the present inventors conducted further studies to complete the present invention.

The thermoplastic resin composition according to the present invention is described in detail as follows.

The thermoplastic resin composition of the present invention includes a polyester resin (A), a vinyl cyanide compound-conjugated diene compound-aromatic vinyl compound graft copolymer (B), an alpha-methylstyrene-vinyl cyanide compound copolymer (C), a maleimide-based polymer (D), and an amide-based lubricant (E). In this case, the thermoplastic resin composition may have excellent heat resistance, chemical resistance, light resistance, and noise resistance while maintaining mechanical properties at a certain level or more, may have excellent economics due to cost reduction, and thus, may be suitable for automotive interior materials.

In addition, the thermoplastic resin composition of the present invention preferably includes a polyester resin (A), a vinyl cyanide compound-conjugated diene compound-aromatic vinyl compound graft copolymer (B), an alpha-methylstyrene-vinyl cyanide compound copolymer (C), a maleimide-based polymer (D), and an amide-based lubricant (E), wherein the thermoplastic resin composition includes 20 to 40 % by weight of the polyester resin (A), 15 to 30 % by weight of the vinyl cyanide compound-conjugated diene compound-aromatic vinyl compound graft copolymer (B), 20 to 35 % by weight of the alpha-methylstyrene-vinyl cyanide compound copolymer (C), 10 to 20 % by weight of the maleimide-based polymer (D), or 0.1 to 5 % by weight of the amide-based lubricant (E). In this case, the thermoplastic resin composition may have excellent heat resistance, chemical resistance, light resistance, and noise resistance while maintaining mechanical properties at a certain level or more, may have excellent economics due to cost reduction, and thus, may be suitable for automotive interior materials.

The thermoplastic resin composition of the present invention preferably includes 20 to 40 % by weight of a polyester resin (A); 15 to 30 % by weight of a vinyl cyanide compound-conjugated diene compound-aromatic vinyl compound graft copolymer (B); 20 to 35 % by weight of an alpha-methylstyrene-vinyl cyanide compound copolymer (C); 10 to 20 % by weight of a maleimide-based polymer (D); and 0.1 to 5 % by weight of an amide-based lubricant (E). In this case, the thermoplastic resin composition may have excellent heat resistance, chemical resistance, light resistance, and noise resistance while maintaining mechanical properties at a certain level or more, may have excellent economics due to cost reduction, and thus, may be suitable for automotive interior materials.

Hereinafter, each component of the thermoplastic resin composition of the present invention will be described in detail.

**(A) Polyester resin**

For example, based on a total weight of the thermoplastic resin composition, the polyester resin (A) may be included in an amount of 20 to 40 % by weight, preferably 25 to 40 % by weight, more preferably 25 to 35 % by weight, still more preferably 28 to 31 % by weight. Within this range, chemical resistance, light resistance, and noise resistance may be improved while maintaining mechanical properties and heat resistance equal or superior to those of conventional heat-resistant ABS resin compositions.

The polyester resin (A) preferably has an intrinsic viscosity of 1.1 dl/g or more, more preferably 1.1 to 1.3 dl/g, still more preferably 1.2 to 1.3 dl/g. Within this range, mechanical properties, processability, impact resistance, and noise resistance may be excellent.

In this description, when intrinsic viscosity is measured, unless noted otherwise, a sample to be measured is completely dissolved in methylene chloride, and then is filtered using a filter to obtain a filtrate. Then, using the obtained filtrate, intrinsic viscosity is measured at 20 °C using a Ubbelohde viscometer.

For example, the polyester resin (A) may include one or more selected from the group consisting of polyethylene adipate (PEA), polybutylene succinate (PBS), polyethylene terephthalate (PET), polybutylene terephthalate (PBT), polytrimethylene terephthalate (PTT), and polyethylene naphthalate (PEN), preferably polybutylene terephthalate. In this case, the overall mechanical properties of the composition may be good, physical property balance may be excellent, and molding may be easily performed.

As the polybutylene terephthalate resin, conventional polybutylene terephthalate resins may be used without particular limitation. For example, the polybutylene terephthalate resin may be a polymer obtained by polycondensation of 1,4-butanediol and dimethyl terephthalate.

As a method of preparing the polyester resin, preparation methods commonly used in the art to which the present invention pertains may be used without particular limitation.

## (B) Vinyl cyanide compound-conjugated diene compound-aromatic vinyl compound graft copolymer

For example, based on a total weight of the thermoplastic resin composition, the graft copolymer (B) may be included in an amount of 15 to 30 % by weight, preferably 20 to 30 % by weight, more preferably 25 to 30 % by weight, still more preferably 26 to 29 % by weight, most preferably 26 to 27 % by weight. Within this range, mechanical properties and thermal stability may be maintained at a certain level, and chemical resistance, light resistance, and noise resistance may be excellent.

For example, the graft copolymer (B) may be a graft copolymer obtained by graft-polymerizing 10 to 40 % by weight of an aromatic vinyl compound and 1 to 20 % by weight of a vinyl cyanide compound onto 40 to 80 % by weight of conjugated diene rubber, preferably a graft copolymer obtained by graft-polymerizing 20 to 35 % by weight of an aromatic vinyl compound and 1 to 15 % by weight of a vinyl cyanide compound onto 50 to 70 % by weight of conjugated diene rubber, more preferably a graft copolymer obtained by graft-polymerizing 25 to 35 % by weight of an aromatic vinyl compound and 5 to 15 % by weight of a vinyl cyanide compound onto 55 to 65 % by weight of conjugated diene rubber. Within this range, mechanical properties and processability may be excellent.

For example, the graft copolymer (B) may have a grafting degree of 30 to 50 %, preferably 35 to 45 %. Within this range, mechanical properties and processability may be excellent.

In this description, to measure grafting degree, graft polymer latex is coagulated, washed, and dried to obtain powdered latex, and then 2 g of the obtained powder is added to 300 ml of acetone, followed by stirring for 24 hours. Then, the stirred solution is separated using an ultracentrifuge, and then methanol is added to the separated acetone solution dropwise to obtain a non-grafted fraction, followed by drying at 60 to 120 °C. Thereafter, the weight of the dried non-grafted fraction is measured, and grafting degree is calculated by substituting the measured weight value into Equation 1 below.

$$\text{Grafting degree (\%)} = (\text{Weight of monomers grafted onto rubber polymer/Total weight of copolymer}) \times 100 \qquad \text{[Equation 1]}$$

For example, the conjugated diene rubber may have an average particle diameter of 600 to 3,500 Å, preferably 1,000 to 3,000 Å, more preferably 1,500 to 2,500 Å. Within this range, mechanical properties and processability may be improved.

In this description, unless otherwise defined, the average particle diameter may be measured by dynamic light scattering, and specifically, may be measured as an intensity value using a Nicomp 380 particle size analyzer (manufacturer: PSS) in a Gaussian mode. As a specific measurement example, a sample may be prepared by diluting 0.1 g of latex (TSC: 35 to 50 wt%) 1,000 to 5,000-fold with distilled water, i.e., a sample is diluted appropriately so as not to deviate significantly from an intensity setpoint of 300 kHz, and is placed in a glass tube. Then, the average particle diameter of the sample is measured using a flow cell in auto-dilution in a measurement mode of dynamic light scattering/intensity 300 kHz/intensity-weight Gaussian analysis. At this time, setting values are as follows: temperature: 23 °C; and measurement wavelength: 632.8 nm.

For example, the graft copolymer (B) may have a weight average molecular weight of 70,000 to 100,000 g/mol, preferably 75,000 to 85,000 g/mol. Within this range, due to appropriate fluidity, processability and impact resistance may be excellent.

In this description, the weight average molecular weight is measured at 40 °C using tetrahydrofuran (THF) as an eluate using a gel permeation chromatograph (GPC) filled with porous silica as a column packing material. In this case, weight average molecular weight is obtained as a relative value to a polystyrene (PS) standard sample.

The weight of the polyester resin (A) is preferably not less than the weight of the vinyl cyanide compound-conjugated diene compound-aromatic vinyl compound graft copolymer (B) . More preferably, the weight of the polyester resin (A) is larger than the weight of the vinyl cyanide compound-conjugated diene compound-aromatic vinyl compound graft copolymer (B). In this case, mechanical properties may be maintained at a certain level or more, and heat resistance, chemical resistance, light resistance, and noise resistance may be excellent. In addition, according to cost reduction, economics may be excellent. Thus, the composition of the present invention may be suitable as an automotive interior material.

In this description, for example, the conjugated diene compound may include one or more selected from the group consisting of 1,3-butadiene, 2,3-dimethyl-1,3-butadiene, 2-ethyl-1,3-butadiene, 1,3-pentadiene, and isoprene.

In this description, for example, the vinyl cyanide compound may be acrylonitrile, methacrylonitrile, or a mixture thereof.

In this description, the aromatic vinyl compound may include one or more selected from the group consisting of styrene, alpha ($\alpha$)-methyl styrene, o-methyl styrene, p-methyl styrene, m-methyl styrene, ethyl styrene, isobutyl styrene, t-butyl styrene, o-bromostyrene, p-bromostyrene, m-bromostyrene, o-chlorostyrene, p-chlorostyrene, m-chlorostyrene, vinyltoluene, vinylxylene, fluorostyrene, and vinylnaphthalene.

As a method of preparing the graft copolymer (B), preparation methods commonly used in the art to which the present invention pertains may be used without particular limitation. For example, the graft copolymer (B) may be prepared by suspension polymerization, emulsion polymerization, solution polymerization, or bulk polymerization, preferably emulsion polymerization.

### (C) Alpha-methylstyrene-vinyl cyanide compound copolymer

Based on a total weight of the thermoplastic resin composition, the alpha-methylstyrene-vinyl cyanide compound copolymer (C) is preferably included in an amount of 20 to 35 % by weight, more preferably 20 to 30 % by weight, still more preferably 25 to 30 % by weight, still more preferably 26 to 29 % by weight, most preferably 26 to 27 % by weight. Within this range, mechanical properties and friction resistance may be maintained at a certain level or more, and heat resistance may be excellent.

The alpha-methylstyrene-vinyl cyanide compound copolymer (C) preferably includes 65 to 85 % by weight of alpha-methylstyrene and 15 to 35 % by weight of a vinyl cyanide compound, more preferably 65 to 80 % by weight of alpha-methylstyrene and 20 to 35 % by weight of a vinyl cyanide compound, still more preferably 70 to 80 % by weight of alpha-methylstyrene and 20 to 30 % by weight of a vinyl cyanide compound, still more preferably 65 to 85 % by weight of alpha-methylstyrene and 25 to 30 % by weight of a vinyl cyanide compound. Within this range, mechanical properties and friction resistance may be maintained at a certain level or more, and heat resistance may be excellent.

As another preferred example, the alpha-methylstyrene-vinyl cyanide compound copolymer (C) may include 65 to 85 % by weight of alpha-methylstyrene, 15 to 35 % by weight of a vinyl cyanide compound, and 0 to 10 % by weight of an aromatic vinyl compound (however, excluding alpha-methylstyrene). Within this range, mechanical properties and friction resistance may be maintained at a certain level or more, and heat resistance may be excellent.

The alpha-methylstyrene-vinyl cyanide compound copolymer (C) preferably has a branching degree of 0.40 to 0.60. Within this range, mechanical properties and friction resistance may be maintained at a certain level or more, and heat resistance may be excellent.

In this description, the branching degree may be obtained by measuring molecular weight and radius of gyration (RG) using multi-angle laser light scattering (MALLS), plotting Log RG against Log Mw, and calculating a slope. Here, when branching degree is 1, branching has not occurred (linear). When branching degree is 0.3, a lot of branching occurs and cross-linking occurs (spherical). As branching degree approaches 0.3, the number of branches of a polymer increases.

For example, the alpha-methylstyrene-vinyl cyanide compound copolymer (C) may have a weight average molecular weight of 80,000 to 200,000 g/mol, preferably 90,000 to 150,000 g/mol. Within this range, mechanical properties and friction resistance may be maintained at a certain level or more, and heat resistance may be excellent.

In this description, the weight average molecular weight (Mw) may be obtained as a relative value to a polystyrene (PS) standard sample using a gel permeation chromatograph (GPC, Waters Breeze).

The alpha-methylstyrene-vinyl cyanide compound copolymer (C) preferably has a glass transition temperature (Tg) of 124 to 140 °C. Within this range, mechanical properties and friction resistance may be maintained at a certain level or more, and heat resistance may be excellent.

In this description, the glass transition temperature (Tg) may be measured using Pyris 6 DSC (Perkin Elmer Co.).

The alpha-methylstyrene-vinyl cyanide compound copolymer (C) preferably has a residual monomer content of 500 ppm or less, more preferably 450 ppm or less, still more preferably 350 to 450 ppm as measured through gas chromatography (GPC). Within this range, flexural strength, flexural modulus, heat resistance, and light resistance may be excellent.

In this description, when the residual monomer content is measured, 2 g of a copolymer is dissolved in 10 mL of chloroform, and is precipitated using 30 ml of methanol to obtain the supernatant of the copolymer. The supernatant is filtered using a 0.2 um disc syringe filter. Then, residual oligomer content is measured using gas chromatography (GC), and the results are analyzed using an automatic liquid sampler-gas chromatography/flame ionization detector (ALS-GC/FID).

For example, the alpha-methylstyrene-vinyl cyanide compound copolymer (C) may have a bulk density of 0.20 to 0.35 g/cc, preferably 0.22 to 0.33 g/cc. Within this range, there are advantages in storage and transport.

In this description, the bulk density (g/cc) may be calculated by dividing the weight grams (g) of powder in a 100 cc cup by 100, and may be expressed in a unit of g/cc.

As a method of preparing the alpha-methylstyrene-vinyl cyanide compound copolymer (C), preparation methods commonly used in the art to which the present invention pertains may be used without particular limitation. As a specific example, a step of adding 0.05 to 0.5 parts by weight of a polyfunctional initiator to 100 parts by weight of a monomer mixture including 65 to 85 % by weight of alpha-methylstyrene and 15 to 35 % by weight of a vinyl cyanide compound and performing polymerization may be included. In this case, polymerization may be suspension polymerization, emulsion polymerization, solution polymerization, or bulk polymerization, preferably bulk polymerization. In this case, heat resistance and fluidity may be excellent.

### (D) Maleimide-based polymer

The maleimide-based polymer (D) is a polymer including a repeat unit derived from a maleimide-based compound. In this case, mechanical properties and heat resistance may be improved.

Based on a total weight of the thermoplastic resin composition, the maleimide-based polymer (D) is preferably included in an amount of 10 to 20 % by weight, more preferably 15 to 20 % by weight, still more preferably 15 to 19 % by weight, still more preferably 16 to 19 % by weight. Within this range, mechanical properties, thermal stability, and friction resistance may be maintained at a certain level, environmental stress cracking (ESC) may be prevented, and injection moldability may be excellent.

For example, the maleimide-based polymer (D) may include 20 % by weight or more, preferably 20 to 60 % by weight, more preferably 30 to 60 % by weight, still more preferably 40 to 60 % by weight, still more preferably 45 to 55 % by weight of a maleimide-based monomer. Within this range, mechanical properties and heat resistance may be excellent.

The maleimide-based polymer (D) is preferably a copolymer including an N-(substituted) maleimide and an aromatic vinyl compound, more preferably a copolymer including an N-(substituted) maleimide; an unsaturated dicarboxylic acid or an anhydride thereof; and an aromatic vinyl compound. Within this range, mechanical properties and heat resistance may be excellent.

As a preferred example, the maleimide-based polymer (D) may include 45 to 55 % by weight of a maleimide-based compound; 40 to 50 % by weight of an aromatic vinyl compound; and 1 to 10 % by weight of maleic acid or an anhydride thereof. Within this range, mechanical properties and heat resistance may be excellent.

The maleimide-based compound is preferably maleimide or an N-(substituted) maleimide, more preferably an N-(substituted) maleimide, as a specific example, may include one or more selected from the group consisting of N-methylmaleimide, N-ethylmaleimide, N-cyclohexylmaleimide, and N-phenylmaleimide. Within this range, mechanical properties and heat resistance may be excellent.

The maleimide-based polymer (D) preferably has a weight average molecular weight of 80,000 to 200,000 g/mol. Within this range, mechanical properties and heat resistance may be excellent.

The maleimide-based polymer (D) preferably has a glass transition temperature of 140 to 210 °C, more preferably 180 to 210 °C, still more preferably 190 to 205 °C. Within this range, mechanical properties and heat resistance may be excellent.

As a method of preparing the maleimide-based polymer (D), preparation methods commonly used in the art to which the present invention pertains may be used without particular limitation. For example, the maleimide-based polymer (D) may be prepared by suspension polymerization, emulsion polymerization, solution polymerization, or bulk polymerization, preferably bulk polymerization.

### (E) Amide-based lubricant

Based on a total weight of the thermoplastic resin composition, the amide-based lubricant (E) is preferably included in an amount of 0.1 to 5 % by weight, more preferably 0.1 to 3 % by weight, still more preferably 0.1 to 2.5 % by weight, still more preferably 0.1 to 2.0 % by weight, still more preferably 0.3 to 2.0 % by weight, most preferably 0.5 to 2.0 % by weight. Within this range, injection moldability may be excellent without deterioration in mechanical properties. In particular, in injection metering, metering time (seconds) and deviation per each shot may be reduced.

The amide-based lubricant (E) is preferably a fatty acid amide-based lubricant. In this case, injection moldability may be excellent.

The fatty acid amide-based lubricant preferably includes one or more selected from the group consisting of stearamide, behanamide, ethylene bis(stearamide), N,N'-ethylene bis(12-hydroxystearamide), erucamide, oleamide, and ethylene bis oleamide, more preferably ethylene bis(stearamide). Within this range, injection moldability may be excellent without deterioration in mechanical properties.

**Thermoplastic resin composition**

When injection metering deviations of 30 shots are measured at an injection temperature of 230 °C and a mold temperature of 50 °C using a 600MT injection machine, the thermoplastic resin composition preferably has a standard deviation of injection metering deviations of 2.4 or less, more preferably 2.0 or less, still more preferably 1.2 or less, still more preferably less than 1.0. Within this range, physical property balance and injection processability may be excellent.

The thermoplastic resin composition preferably has a fluidity (melt flow rate) of 10 to 25 g/10 min, more preferably 10 to 20 g/10 min, still more preferably 11 to 16 g/10 min, still more preferably 12 to 14 g/10 min as measured under conditions of 260 °C and 5 kg according to ISO 1133. Within this range, physical property balance, processability, and injection moldability may be excellent.

When injection metering deviations of 30 shots are measured at an injection temperature of 230 °C and a mold temperature of 50 °C using a 600MT injection machine, the thermoplastic resin composition preferably has an average value of injection metering deviations of 18.3 or less, more preferably 18.1 or less, still more preferably 16 or less, still more preferably 14 or less, most preferably less than 13.5. Within this range, physical property balance and injection processability may be excellent.

The thermoplastic resin composition preferably has a heat deflection temperature of 108 °C or more, as a specific example, 108 to 110 °C as measured under 0.45 MPa according to ISO 75. Within this range, physical property balance and heat resistance may be excellent.

The thermoplastic resin composition preferably has a heat deflection temperature of 88 °C or more, as a specific example, 88 to 100 °C, preferably 88 to 95 °C as measured under 1.82 MPa according to ISO 75. Within this range, physical property balance and heat resistance may be excellent.

When flexural strength and flexural modulus are measured using a 1/8" thick specimen under conditions of a span of 64 mm and a test speed of 2 mm/min according to ISO 178, the thermoplastic resin composition preferably has a flexural strength of 66 MPa or more and a flexural modulus of 1,950 MPa or more, as a specific example, a flexural strength of 66 to 70 MPa and a flexural modulus of 1,950 to 2,020 MPa. Within this range, physical property balance and mechanical strength may be excellent.

For example, in the case of the thermoplastic resin composition, when irradiation is performed under conditions of a temperature of 8913 °C, a relative humidity of $50\pm5$ %, an irradiation dose of 84 MJ/m$^2$, and an irradiance of $0.55\pm0.02$ W/m$^2\cdot$nm (wavelength range: 300 to 400 nm) according to MS210-05 or ISO 105, a glossy specimen may have a color difference change ($\Delta$E) of 1.2 or less, preferably 1.1 or less, more preferably 0.5 to 1.1. Within this range, balance of all physical properties may be excellent.

In this description, when the color difference ($\Delta$E) is measured, the color of a specimen is determined using a Hunter Lab color meter, and $\Delta$E is calculated by Equation 3 below.

[Equation 3]

$$\Delta E = \sqrt{\left\{\left(L - L'\right)^2 + \left(a - a'\right)^2 + \left(b - b'\right)^2\right\}}$$

In addition, in the case of the thermoplastic resin composition, when irradiation is performed under conditions of a temperature of 8913 °C, a relative humidity of $50\pm5$ %, an irradiation dose of 84 MJ/m$^2$, and an irradiance of $0.55\pm0.02$ W/m$^2\cdot$nm (wavelength range: 300 to 400 nm) according to MS210-05 or ISO 105, an embossed specimen may have a color difference ($\Delta$E) of 0.9 or less, preferably 0.5 to 0.9. Within this range, balance of all physical properties may be excellent.

In this description, a specimen for measuring light resistance is prepared at an injection temperature of 230 to 250 °C and a mold temperature of 50 °C using a mold that is mirror surface-finished at 2,000 to 40,000 grit. An embossed specimen is prepared in the same manner as the above specimen except for using a mold having an embossed pattern having a size of 15 to 21 um formed on the surface thereof.

In general, in the case of a conventional thermoplastic resin composition used as an automotive interior material, a glossy specimen and an embossed specimen have a color difference ($\Delta$E) of 2 or less as measured according to MS210-05 or ISO 105. In the case of the thermoplastic resin composition according to the present invention, a glossy specimen and an embossed specimen have a color difference (ΔE) of 1.2 or less and a color difference (ΔE) of 1.0 or less, respectively. That is, the color difference of the thermoplastic resin composition of the present invention is significantly less than the color difference of the conventional thermoplastic resin composition, indicating that the thermoplastic resin composition of the present invention has excellent light resistance compared to the conventional thermoplastic resin composition.

For example, when a specimen having a size (length: 165 mm, width: 19 mm, thickness: 3.2 mm) identical to that of a tensile strength measurement specimen according to ASTM D638 is fixed to a jig having a stress of 2.0 % according to an environmental stress cracking (ESC) test, 25 μl of an air freshener (a mixed solution containing isoamyl acetate, limonene, and linalool in a volume ratio of 4:1:1) is applied to the specimen using a micropipette, and then, after 2 hours, occurrence of crazes or cracks is observed, the thermoplastic resin composition may have no crazes or cracks. Within this range, balance of all physical properties may be excellent.

In this description, environmental stress cracking is related to chemical resistance, and refers to a phenomenon in which cracks and fractures occur on the surface of plastic when the plastic comes into contact with chemicals in the presence of continuous internal and external stress.

FIG. 1 below schematically shows a method of measuring environmental stress cracking, and shows a series of procedures in which an air freshener is applied to a specimen having a size identical to that of a tensile strength measurement specimen according to ASTM D638 is fixed to a jig having a stress of 2.0 %, and then, after 2 hours, the surface of the specimen is observed. The surface of a specimen without crazes or cracks is marked as "Normal". The surface of a specimen with crazes or cracks is marked as "Craze & Crack". A specimen fractured by cracks is marked as "Crack & Break". In addition, in FIG. 1, the right figure schematically illustrates a process in which crazes or cracks occur on the surface of a specimen and the specimen is fractured.

For example, the thermoplastic resin composition has an Izod impact strength of 15 kJ/m$^2$ or more, preferably 20 kJ/m$^2$ or more, as a specific example, 15 to 25 kJ/m$^2$, preferably 20 to 25 kJ/m$^2$ as measured at 23 °C using a notched specimen according to ISO 180/1A. Within this range, balance of all physical properties may be excellent.

For example, the thermoplastic resin composition may have a tensile strength of 37 MPa or more, preferably 37 to 45 MPa, more preferably 40 to 43 MPa as measured under conditions of 50 mm/min according to ISO 527. Within this range, balance of all physical properties may be excellent.

For example, the thermoplastic resin composition may have an elongation of 37 % or more, preferably 40 % or more, as a specific example, 37 to 45 % as measured under conditions of 50 mm/min according to ISO 527. Within this range, balance of all physical properties may be excellent.

For example, the thermoplastic resin composition may have a density of 1.11 g/cm$^3$ or less, preferably 1.00 to 1.11 g/cm$^3$ as measured according to ISO 1183. Within this range, weight may be reduced, and balance of all physical properties may be excellent.

For example, when acceleration, impulse, frequency, friction, and fluctuation are measured using a flat specimen having a size of 70 × 60 mm and a flat specimen having a size of 25 × 50 mm under conditions of a specimen load of 10 N and a motion condition of 1 mm/s using a Ziegler SSP-04, and a risk priority number (RPN) value, which represents friction noise properties, is calculated by Equation 2 below, the thermoplastic resin composition may have a risk priority number (RPN) value of 3 or less, preferably 1 to 3. Within this range, balance of all physical properties and noise resistance may be excellent.

For example, when acceleration, impulse, frequency, friction, and fluctuation are measured using a flat specimen having a size of 70 × 60 mm and a flat specimen having a size of 25 × 50 mm under conditions of a specimen load of 10 N and a motion condition of 4 mm/s using a Ziegler SSP-04, and a risk priority number (RPN) value, which represents friction noise properties, is calculated by Equation 2 below, the thermoplastic resin composition may have a risk priority number (RPN) value of 2 or less, preferably 1 to 2. Within this range, balance of all physical properties and noise resistance may be excellent.

For example, when acceleration, impulse, frequency, friction, and fluctuation are measured using a flat specimen having a size of 70 × 60 mm and a flat specimen having a size of 25 × 50 mm under conditions of a specimen load of 40 N and a motion condition of 1 mm/s using a Ziegler SSP-04, and a risk priority number (RPN) value, which represents friction noise properties (stick-slip noise), is calculated by Equation 2 below, the thermoplastic resin composition may have a risk priority number (RPN) value of 2 or less, preferably 1 to 2. Within this range, balance of all physical properties and noise resistance may be excellent.

For example, when acceleration, impulse, frequency, friction, and fluctuation are measured using a flat specimen having a size of 70 × 60 mm and a flat specimen having a size of 25 × 50 mm under conditions of a specimen load of 40 N and a motion condition of 4 mm/s using a Ziegler SSP-04, and a risk priority number (RPN) value, which represents friction noise properties (stick-slip noise), is calculated by Equation 2 below, the thermoplastic resin composition may have a risk priority number (RPN) value of 1 or less. Within this range, balance of all physical properties and noise resistance may be excellent.

[Equation 2]

$$RPN = \frac{2^*grade_{energie\_rate} + grade_{impulse\_rate} + grade_{acceleration}}{4}$$

<Evaluation of friction noise properties>

RPN of 1 or more and 3 or less: Good (Very low probability of generating friction noise)
RPN of 4 or more and 5 or less: Partially good
RPN of 6 or more and 10 or less: Not good

In the present invention, friction noise properties are related to buzz, squeak, and rattle (BSR) generated in a vehicle and are properties associated with aesthetics. Friction noise occurs at the assembly seam, joint, or friction area of a system, and is also called noise. Here, buzz is caused by structural vibration and is a drum-like noise generated from the panel of a part, squeak is a noise generated by friction between parts in a shear direction, and rattle is a noise generated by vertical collision between parts.

FIG. 2 below schematically shows a method of measuring friction noise properties using a Ziegler SSP-04. Using a flat specimen having a size of $70 \times 60$ mm and a flat specimen having a size of $25 \times 50$ mm, friction noise properties are measured under four conditions of (10 N, 1 mm/s), (10 N, 4 mm/s), (40 N, 1 mm/s), and (40 N, 4 mm/s).

The thermoplastic resin composition preferably includes 0.1 to 5 % by weight of one or more selected from the group consisting of an antioxidant and a UV absorber. Within this range, processability, light resistance, noise resistance, and chemical resistance may be improved.

For example, the antioxidant may be a phenolic antioxidant, a phosphorus antioxidant, or a mixture thereof, preferably a phenolic antioxidant. In this case, oxidation due to heat may be prevented during an extrusion process, and mechanical properties and heat resistance may be excellent.

For example, the phenolic antioxidant may include one or more selected from the group consisting of N,N'-hexane-1,6-diyl-bis[3-(3,5-di-t-butyl-4-hydroxyphenyl propionamide)], pentaerythritol tetrakis[3-(3,5-di-t-butyl-4-hydroxyphenyl)propionate], N,N'-hexamethylene-bis(3,5-di-t-butyl-4-hydroxy-hydrocinnamamide), triethyleneglycol-bis[3-(3-t-butyl-5-methyl-4-hydroxyphenyl)propionate], 3,5-di-t-butyl-4-hydroxybenzilphosphonate-diethylester, 1,3,5-trimethyl-2,4,6-tris(3,5-di-t-butyl-4-hydroxybenzil)benzene, and 1,3,5-tris(4-t-butyl-3-hydroxy-2,6-dimethylbenzil)isocyanurate. In this case, heat resistance may be greatly improved while maintaining physical property balance at a high level.

For example, the phosphorus antioxidant may include one or more selected from the group consisting of triphenylphosphite, tris(nonylphenyl)phosphite, tris(2,4-di-tert-butylphenyl)phosphite, tris(2,6-di-tert-butylphenyl)phosphite, tridecylphosphite, trioctylphosphite, trioctadecylphosphite, didecylmonophenylphosphite, dioctylmonophenylphosphite, diisopropylmonophenylphosphite, monobutyldiphenylphosphite, monodecyldiphenylphosphite, monooctyldiphenylphosphite, bis(2,6-di-tert-butyl-4-methylphenyl)pentaerythritoldiphosphite, 2,2-methylenebis(4,6-di-tert-butyl-phenyl)octylphosphite, bis(nonylphenyl)pentaerythritoldiphosphite, bis(2,4-di-tert-butylphenyl)pentaerythritoldiphosphite, stearylpentaerythritoldiphosphite, tributylphosphate, triethylphosphate, and trimethylphosphate.

Based on a total weight of the thermoplastic resin composition, the antioxidant is preferably included in an amount of 0.05 to 1.0 % by weight, more preferably 0.1 to 0.7 % by weight, still more preferably 0.1 to 0.5 % by weight. Within this range, physical property balance may be excellent, and heat resistance may be improved.

For example, the UV absorber may include one or more selected from the group consisting of a triazine-based UV absorber, a benzophenone-based UV absorber, a benzotriazole-based UV absorber, a quinolinone-based UV absorber, a benzoate-based UV absorber, a cyanoacrylate-based UV absorber, and a benzoxazole-based UV absorber, preferably a benzotriazole-based UV absorber. In this case, physical property balance may be excellent, and light resistance may be further improved.

For example, the triazine-based UV absorber may include one or more selected from the group consisting of 2,4-diphenyl-6-(2-hydroxy-4-methoxyphenyl)-1,3,5-triazine, 2,4-diphenyl-6-(2-hydroxy-4-ethoxyphenyl)-1,3,5-triazine, 2,4-diphenyl-(2-hydroxy-4-propoxyphenyl)-1,3,5-triazine, 2,4-diphenyl-(2-hydroxy-4-butoxyphenyl)-1,3,5-triazine, 2,4-diphenyl-6-(2-hydroxy-4-butoxyphenyl)-1,3,5-triazine, 2,6-diphenyl-4-(2-hydroxy-4-hexyloxyphenyl)-1,3,5-triazine, 2,4-diphenyl-6-(2-hydroxy-4-octyloxyphenyl)-1,3,5-triazine, 2,4-diphenyl-6-(2-hydroxy-4-dodecyloxyphenyl)-1,3,5-triazine, 2,4-diphenyl-6-(2-hydroxy-4-benzyloxyphenyl)-1,3,5-triazine, 2,4,6-tris(2-hydroxy-4-propoxyphenyl)-1,3,5-triazine, 2,4,6-tris(2-hydroxy-4-butoxyphenyl)-1,3,5-triazine, 2,4,6-tris(2-hydroxy-4-butoxyphenyl)-1,3,5-triazine, 2,4,6-tris(2-hydroxy-4-hexyloxyphenyl)-1,3,5-triazine, 2,4,6-tris(2-hydroxy-4-octyloxyphenyl)-1,3,5-triazine, 2,4,6-tris(2-hydroxy-4-dodecyloxyphenyl)-1,3,5-triazine, 2,4,6-tris(2-hydroxy-4-benzyloxyphenyl)-1,3,5-triazine, 2,4,6-tris(2-hydroxy-4-ethoxyethoxyphenyl)-1,3,5-triazine, 2,4,6-tris(2-hydroxy-4-butoxyethoxyphenyl)-1,3,5-triazine, 2,4,6-tris(2-hydroxy-4-propoxyethoxyphenyl)-1,3,5-triazine, 2,4,6-tris(2-hydroxy-4-methoxycarbonylpropyloxyphenyl)-1,3,5-triazine, 2,4,6-tris(2-hydroxy-4-ethoxycarbonylethyloxyphenyl)-1,3,5-triazine, 2,4,6-tris(2-hydroxy-4-(1-(2-ethoxyhexyloxy)-1-oxopropane-2-yloxy)phenyl)-1,3,5-triazine, 2,4,6-tris(2-hydroxy-3-methyl-4-ethoxyphenyl)-1,3,5-triazine, 2,4,6-tris(2-hydroxy-3-methyl-4-propoxyphenyl)-1,3,5-triazine, 2,4,6-tris(2-hydroxy-3-methyl-4-butoxyphenyl)-1,3,5-triazine, 2,4,6-tris(2-hydroxy-3-methyl-4-butoxyphenyl)-1,3,5-triazine, 2,4,6-tris(2-hydroxy-3-methyl-4-hexyloxyphenyl)-1,3,5-triazine, 2,4,6-tris(2-hydroxy-3-methyl-4-octyloxyphenyl)-1,3,5-triazine, 2,4,6-tris(2-hydroxy-3-methyl-4-dodecyloxyphenyl)-1,3,5-triazine, 2,4,6-tris(2-hydroxy-3-methyl-4-benzyloxyphenyl)-1,3,5-triazine, 2,4,6-tris(2-hydroxy-3-methyl-4-ethoxyethoxyphenyl)-1,3,5-triazine, 2,4,6-tris(2-hydroxy-3-methyl-4-butoxyethoxyphenyl)-1,3,5-triazine, 2,4,6-tris(2-hydroxy-3-methyl-4-propoxyethoxyphenyl)-1,3,5-triazine, 2,4,6-tris(2-hydroxy-3-methyl-4-methoxycarbonylpropyloxyphenyl)-1,3,5-triazine, 2,4,6-tris(2-hydroxy-3-methyl-4-ethoxycarbonylethyloxyphenyl)-1,3,5-triazine, 2,4,6-tris(2-hydroxy-3-methyl-4-(1-(2-ethoxyhexyloxy)-1-oxopropane-2-yloxy)phenyl)-1,3,5-triazine, 2,4-bis(2,4-dimethylphenyl)-6-(2-hydroxy-4-N-octyloxyphenyl)-1,3,5-triazine, and 2-(4,6-diphenyl-1,3,5-triazine-2-yl)-5-(2-(2-ethylhexanoyloxy)ethoxy)phenol.

For example, the benzophenone-based UV absorber may include one or more selected from the group consisting of 2,4-dihydroxybenzophenone, 2-hydroxy-4-methoxybenzophenone, 2-hydroxy-4-octoxybenzophenone, 2-hydroxy-4-benzyloxybenzophenone, 2-hydroxy-4-methoxy-5-sulfoxybenzophenone, 2-hydroxy-4-methoxy-5-sulfoxytrihydratebenzophenone, 2-hydroxy-4-dodecyloxy-benzophenone, 2-hydroxy-4-octadecyloxy-benzophenone, 2,2'-dihydroxy-4-methoxybenzophenone, 2,2',4,4'-tetrahydroxybenzophenone, 2,2'-dihydroxy-4,4'-dimethoxybenzophenone, 2,2'-dihydroxy-4,4'-dimethoxy-5-sodiumsulfoxybenzophenone, bis(5-benzoyl-4-hydroxy-2-methoxyphenyl)methane, 2-hydroxy-4-n-dodecyloxybenzophenone, 2-hydroxy-4-methoxy-2'-carboxybenzophenone, and 4,4'-bis(diethylamino)benzophenone.

For example, the benzotriazole-based UV absorber may include one or more selected from the group consisting of 2-(2'-hydroxy-5'-methylphenyl)benzotriazole, 2-2'-hydroxy-3',2-(2'-hydroxy-3'-tert-butyl-5'-methylphenyl)benzotriazole, 2-(2'-hydroxy-5'-methylphenyl)benzotriazole, 5'-bis($\alpha,\alpha$-dimethylbenzil)phenyl-benzotriazole, 2-(2'-hydroxy-3',5'-di-tert-butyl-phenyl)-benzotriazole, 2-(2'-hydroxy-3'-tert-butyl-5'-methylphenyl)-5-chlorobenzotriazole, 2-(2'-hydroxy-3',5'-di-tert-butyl-phenyl)-5-chlorobenzotriazole, 2-(2'-hydroxy-3',5'-di-tert-amyl)-benzotriazole, 2-(2'-hydroxy-3',5'-di-tert-amylphenyl)-5-chlorobenzotriazole, 2-(2'-hydroxy-3'-(3",4",5",6"-tetrahydrophthalimidemethyl)-5'-methylphenyl)benzotriazole, 2-(2-hydroxy-3,5-di-tert-pentylphenyl), 2-(2'-hydroxy-5'-tert-octylphenyl)benzotriazole, and 2,2'-methylenebis [4-(1,1,3,3-tetramethylbutyl)-6-(2H-benzotriazole-2-yl)phenol.

For example, the indole-based UV absorber may be 2-[(1-methyl-2-phenyl-1H-indole-3-yl)methylene]propanedinitrile.

For example, the quinolinone-based UV absorber may be 4-hydroxy-3-[(phenylimino)methyl]-2(1H)-quinolinone.

For example, the benzoate-based UV absorber may include one or more selected from the group consisting of 2,4-di-t-butylphenyl-3',5'-di-t-butyl-4'-hydroxybenzoate, 2,6-di-t-butylphenyl-3',5'-di-t-butyl-4'-hydroxybenzoate, n-hexadecyl-3,5-di-t-butyl-4-hydroxybenzoate, and n-octadecyl-3,5-di-t-butyl-4-hydroxybenzoate.

For example, the cyanoacrylate-based UV absorber may be 2'-ethylhexyl-2-cyano-3,3-diphenylacrylate, ethyl-2-cyano-3-(3',4'-methylenedioxyphenyl)-acrylate, or a mixture thereof.

Based on a total weight of the thermoplastic resin composition, the UV absorber is preferably included in an amount of 0.05 to 1.0 % by weight, more preferably 0.1 to 0.7 % by weight, still more preferably 0.1 to 0.5 % by weight. Within this range, physical property balance may be excellent, and light resistance may be further improved.

## Method of preparing thermoplastic resin composition

A method of preparing the thermoplastic resin composition of the present invention includes a step of melt-kneading and extruding a polyester resin (A), a vinyl cyanide compound-conjugated diene compound-aromatic vinyl compound graft copolymer (B), an alpha-methylstyrene-vinyl cyanide compound copolymer (C), a maleimide-based polymer (D), and an amide-based lubricant (E) at 200 to 300 °C. In this case, the thermoplastic resin composition may have excellent heat resistance, chemical resistance, light resistance, and noise resistance while maintaining mechanical properties at a certain level or more, may have great advantages in terms of economics, and thus, may be suitable for automotive interior materials due to these advantageous features.

In addition, the method of preparing the thermoplastic resin composition of the present invention preferably includes a step of melt-kneading and extruding a polyester resin (A), a vinyl cyanide compound-conjugated diene compound-aromatic vinyl compound graft copolymer (B), an alpha-methylstyrene-vinyl cyanide compound copolymer (C), a maleimide-based polymer (D), and an amide-based lubricant (E) at 200 to 300 °C, wherein the thermoplastic resin composition includes 20 to 40 % by weight of the polyester resin (A); 15 to 30 % by weight of the vinyl cyanide compound-conjugated diene compound-aromatic vinyl compound graft copolymer (B); 20 to 35 % by weight of the alpha-methylstyrene-vinyl cyanide compound copolymer (C); 10 to 20 % by weight of the maleimide-based polymer (D); or 0.1 to 5 % by weight of the amide-based lubricant (E). In this case, the thermoplastic resin composition may have excellent heat resistance, chemical resistance, light resistance, and noise resistance while maintaining mechanical properties at a certain level or more, may have great advantages in terms of economics, and thus, may be suitable for automotive interior materials due to these advantageous features.

In addition, more preferably, the method of preparing the thermoplastic resin composition of the present invention includes a step of melt-kneading and extruding 20 to 40 % by weight of a polyester resin (A); 15 to 30 % by weight of a vinyl cyanide compound-conjugated diene compound-aromatic vinyl compound graft copolymer (B); 20 to 35 % by weight of an alpha-methylstyrene-vinyl cyanide compound copolymer (C); 10 to 20 % by weight of a maleimide-based polymer (D); and 0.1 to 5 % by weight of an amide-based lubricant (E) at 200 to 300 °C. In this case, the thermoplastic resin composition may have excellent heat resistance, chemical resistance, light resistance, and noise resistance while maintaining mechanical properties at a certain level or more, may have great advantages in terms of economics, and thus, may be suitable for automotive interior materials due to these advantageous features.

For example, the method of preparing the thermoplastic resin composition may include a step of preparing a vinyl cyanide compound-conjugated diene compound-aromatic vinyl compound copolymer (B).

For example, the step of preparing the vinyl cyanide compound-conjugated diene compound-aromatic vinyl compound copolymer (B) may be a step of adding 70 to 200 parts by weight of deionized water, 0.1 to 2 parts by weight of an initiator, 0.1 to 2 parts by weight of an emulsifier, and 0.05 to 1.5 parts by weight of a molecular weight modifier to 100 parts by weight in total of conjugated diene rubber latex, an aromatic vinyl compound, and a vinyl cyanide compound to perform polymerization; terminating polymerization at a polymerization conversion rate of 93 to 99 % by weight to obtain graft copolymer latex; and coagulating, dehydrating, and drying the graft copolymer latex.

As a specific example, the step of preparing the vinyl cyanide compound-conjugated diene compound-aromatic vinyl compound copolymer (B) may be a step of adding, based on 100 parts by weight in total of conjugated diene rubber, an aromatic vinyl compound, and a vinyl cyanide compound, a mixed solution including 10 to 40 % by weight of an aromatic vinyl compound, 1 to 20 % by weight of a vinyl cyanide compound, 10 to 50 parts by weight of deionized water, 0.09 to 1.5 parts by weight of an initiator, 0.1 to 2 parts by weight of an emulsifier, and 0.05 to 1.5 parts by weight of a molecular weight modifier, which are mixed in a separate mixing device, to 40 to 80 % by weight (based on solids) of conjugated diene rubber latex and 60 to 150 parts by weight of deionized water at 65 to 75 °C for 2 to 4 hours; adding 0.01 to 0.5 parts by weight of an initiator thereto; increasing temperature to 75 to 80 °C for 30 to 90 minutes; terminating graft polymerization at a polymerization conversion rate of 93 to 99 % by weight to obtain graft copolymer latex; and coagulating, dehydrating, and drying the graft copolymer latex. In this case, mechanical properties and processability may be excellent.

In this description, as a method of measuring polymerization conversion rate, measurement methods commonly used in the art to which the present invention pertains may be used without particular limitation.

For example, the conjugated diene rubber latex included when preparing the vinyl cyanide compound-conjugated diene compound-aromatic vinyl compound copolymer (B) may be prepared by adding 30 to 100 parts by weight of deionized water, 0.5 to 3 parts by weight of an emulsifier, 0.01 to 0.5 parts by weight of an electrolyte, 0.1 to 0.5 parts by weight of a molecular weight modifier, and 0.1 to 1 part by weight of an initiator to 100 parts by weight of a conjugated diene compound to perform polymerization. In this case, impact resistance may be excellent.

As another example, the conjugated diene rubber latex may be prepared by adding 40 to 70 parts by weight of deionized water, 1 to 2.5 parts by weight of an emulsifier, 0.05 to 0.3 parts by weight of an electrolyte, 0.2 to 0.4 parts by weight of a molecular weight modifier, and 0.3 to 0.8 parts by weight of an initiator to 100 parts by weight of a conjugated diene compound to perform polymerization. In this case, impact resistance may be excellent.

For example, the emulsifier used when preparing the graft copolymer latex and/or the conjugated diene rubber latex may include one or more selected from the group consisting of rosin acid metal salts, alkyl aryl sulfonates, alkali methyl alkyl sulfates, sulfonated alkyl esters, and metal salts of unsaturated fatty acids.

For example, the electrolyte used when preparing the graft copolymer latex and/or the conjugated diene rubber latex may include one or more selected from the group consisting of KCl, NaCl, $KHCO_3$, $NaHCO_3$, $K_2CO_3$, $Na_2CO_3$, $KHSO_3$, $NaHSO_3$, $K_4P_2O_7$, $Na_4P_2O_7$, $K_3PO_4$, $Na_3PO_4$, $K_2HPO_4$, and $Na_2HPO_4$.

For example, the initiator used when preparing the graft copolymer latex and/or the conjugated diene rubber latex may be a water-soluble persulfuric acid polymerization initiator, a fat-soluble polymerization initiator, or an oxidation-reduction catalyst system. For example, the water-soluble persulfuric acid polymerization initiator may include one or more selected from the group consisting of potassium persulfate, sodium persulfate, and ammonium persulfate; the fat-soluble polymerization initiator may include one or more selected from the group consisting of cumene hydroperoxide, diisopropyl benzene hydroperoxide, azobis iso butyronitrile, t-butyl hydroperoxide, paramethane hydroperoxide, and benzoylperoxide; and the oxidation-reduction catalyst system may include one or more selected from the group consisting of sodium formaldehyde sulfoxylate, sodium ethylenediamine tetraacetate, ferrous sulfate, dextrose, sodium pyrrolate, and sodium sulfite.

In the method of preparing the graft copolymer and the rubber latex, other reaction conditions, such as reaction time, reaction temperature, pressure, and time of input of reactants, other than the above-mentioned conditions, may be appropriately selected and used without particular limitation as long as the other reaction conditions are commonly used in the art to which the present invention pertains.

For example, the kneading and extrusion may be performed using a single-screw extruder, a twin-screw extruder, or a Banbury mixer. In this case, due to uniform dispersion of a composition, compatibility may be excellent.

For example, the kneading and extrusion may be performed at a barrel temperature of 200 to 250 °C, preferably 210 to 240 °C. In this case, throughput per unit time may be appropriate, and melt-kneading may be sufficiently performed. In addition, thermal decomposition of resin components may be prevented.

For example, the kneading and extrusion may be performed at a screw rotation speed of 200 to 300 rpm, preferably 230 to 270 rpm. In this case, throughput per unit time may be appropriate, and thus, process efficiency may be excellent. In addition, excessive cutting may be suppressed.

**Molded article**

For example, a molded article of the present invention may be manufactured using the thermoplastic resin composition of the present invention. In this case, mechanical properties, thermal stability, and noise resistance may be maintained at a certain level, and chemical resistance, processability, and injection moldability may be improved.

The molded article is preferably an automotive interior material, as a specific example, center fascia or door trim.

A method of manufacturing the molded article preferably includes a step of melt-kneading and extruding 20 to 40 % by weight of a polyester resin (A); 15 to 30 % by weight of a vinyl cyanide compound-conjugated diene compound-aromatic vinyl compound graft copolymer (B); 20 to 35 % by weight of an alpha-methylstyrene-vinyl cyanide compound copolymer (C); 10 to 20 % by weight of a maleimide-based polymer (D); and 0.1 to 5 % by weight of an amide-based lubricant (E) at 200 to 300 °C to prepare pellets and a step of injecting the prepared pellets using an injection machine, wherein, when injection metering deviations of 30 shots are measured at an injection temperature of 230 °C and a mold temperature of 50 °C using a 600MT injection machine, the molded article has a standard deviation of injection metering deviations of 2.4 or less or an average value of injection metering deviations of 18.3 or less. In this case, physical property balance and injection processability may be excellent.

In describing the thermoplastic resin composition of the present invention, the method of preparing the same, and the molded article including the same, it should be noted that other conditions or equipment not explicitly described herein may be appropriately selected within the range commonly practiced in the art without particular limitation.

Hereinafter, the present invention will be described in more detail with reference to the following preferred examples.

[Examples]

Materials used in Examples and Comparative Examples below are as follows.

* A1: Polybutylene terephthalate (intrinsic viscosity: 1.0 dl/g)
* A2: Polybutylene terephthalate (intrinsic viscosity: 1.2 dl/g)
* B1: Acrylonitrile-butadiene-styrene graft copolymer (graft copolymer obtained by graft-polymerizing 50 % by weight of butadiene rubber, 30 % by weight of styrene, and 10 % by weight of acrylonitrile, grafting degree: 39 % by weight, weight average molecular weight: 78,000 g/mol)
* C1: Styrene-acrylonitrile copolymer (acrylonitrile: 28 % by weight)
* C2: Alpha-methylstyrene-acrylonitrile-styrene copolymer (alpha-methylstyrene: 65 % by weight, acrylonitrile: 28 % by weight)
* D1: Styrene-N-phenylmaleimide-maleic anhydride copolymer (styrene: 46 % by weight, N-phenylmaleimide: 52 % by weight, maleic anhydride: 2 % by weight)
* E1: Polyethylene wax lubricant
* E2: Ethylene bis-stearamide lubricant
* Antioxidant: Phenolic antioxidant
* UV absorber: Hydroxyphenyl benzotriazole-based UV absorber

Examples 1 to 10 and Comparative Examples 1 to 7

According to the contents as shown in Tables 1 and 2 below, the components shown in Tables 1 and 2 were fed into an extruder (42Ψ, barrel temperature: 230 °C) to obtain pellets, and the pellets were injected to obtain a specimen for measuring physical properties.

[Test Examples]

The physical properties of the specimens prepared in Examples 1 to 10 and Comparative Examples 1 to 7 were measured according to the following methods, and the results are shown in Tables 1 and 2 below.

* Fluidity (melt flow rate) : Melt flow rate was measured under conditions of 260 °C and 5 kg according to ISO 1133. Here, the unit of melt flow rate is g/10 min.
* Izod impact strength ($KJ/m^2$): Izod impact strength was measured at 23 °C using a notched specimen according to ISO 180/1A.
* Tensile strength (MPa): Tensile strength was measured under conditions of 50 mm/min according to ISO 527.
* Elongation (%): Elongation was measured under conditions of 50 mm/min according to ISO 527.
* Flexural strength and flexural modulus (MPa): Flexural strength and flexural modulus were measured under conditions of a span of 64 mm and a test speed of 2 mm/min using a 1/8" thick specimen according to ISO 178.
* Heat deflection temperature (°C): Heat deflection temperature was measured under 0.45 MPa according to ISO 75.
* Density ($g/cm^3$) : Density was measured according to ISO 1183.
* ESC test (chemical resistance): A specimen having a size (length: 165 mm, width: 19 mm, thickness: 3.2 mm) identical to that of a tensile strength measurement specimen according to ASTM D638 was fixed to a jig having a stress of 2.0 %, 25 $\mu$l of an air freshener (mixed solution containing isoamyl acetate, limonene, and linalool in a volume ratio of 4:1:1) was applied to the specimen using a micropipette, and then, after 2 hours, occurrence of crazes or cracks was observed with the naked eye. When no crazes or cracks occurred, it was marked as "o". When crazes or cracks occurred, it was marked as "X".
* Friction noise properties (stick-slip noise): Acceleration, impulse, frequency, friction, and fluctuation each were measured using a flat specimen having a size of 70 × 60 mm and a flat specimen having a size of 25 × 50 mm at a temperature of 23 °C and a relative humidity of 50 % using a Ziegler SSP-04, a risk priority number (RPN) value was calculated by Equation 2 below, and then friction noise properties were evaluated according to the following criteria. At this time, four conditions of a specimen load of 10 N and a motion condition of 1 mm/s; a specimen load of 10 N and a motion condition of 4 mm/s; a specimen load of 40 N and a motion condition of 1 mm/s; and a specimen load of 40 N and a motion condition of 4 mm/s were conducted.

[Equation 2]

$$RPN = \frac{2^*grade_{energie\_rate} + grade_{impulse\_rate} + grade_{acceleration}}{4}$$

<Evaluation of friction noise properties>

RPN of 1 or more and 3 or less: Good (Very low probability of generating friction noise)
RPN of 4 or more and 5 or less: Partially good
RPN of 6 or more and 10 or less: Not good

* Light resistance: The color difference change ($\triangle E$) of each of a glossy specimen and an embossed specimen was measured under conditions of a temperature of 8913 °C, a relative humidity of 5015 %, an irradiation dose of 84 $MJ/m^2$, and an irradiance of 0.55±0.02 $W/m^2$·nm (wavelength range: 300 to 400 nm) according to MS210-05 or ISO 105. The glossy specimen was prepared at an injection temperature of 230 to 250 °C and a mold temperature of 50 °C using a mold that had been mirror surface-finished at 2,000 to 40,000 grit, and the embossed specimen was prepared in the same manner as the above specimen except for using a mold having an embossed pattern having a size of 15 to 21 um formed on the surface thereof.

When the color difference ($\triangle E$) was measured, the color of a specimen was determined using a Hunter Lab

color meter, and ∆E was calculated by Equation 3 below.

[Equation 3]

$$\Delta E = \sqrt{\left\{ (L - L')^2 + (a - a')^2 + (b - b')^2 \right\}}$$

* Injection metering deviation: Injection metering deviations of 30 shots were measured at an injection temperature of 230 °C and a mold temperature of 50 °C using a 600MT injection machine, and the average value and standard deviation thereof were calculated.

[Table 1]

| Classification (content unit: % by weight) | | Examples | | | | | |
|---|---|---|---|---|---|---|---|
| | | 1 | 2 | 3 | 4 | 5 | 6 |
| A1 | | | | | | | |
| A2 | | 28.0 | 30.0 | 30.5 | 31.0 | 31.0 | 31.0 |
| B1 | | 27.0 | 26.0 | 26.0 | 26.0 | 26.0 | 26.0 |
| C1 | | | | | | | |
| C2 | | 27.0 | 26.0 | 26.0 | 26.0 | 21.0 | 31.0 |
| D1 | | 16.0 | 16.0 | 16.0 | 16.0 | 21.0 | 11.0 |
| E1 | | | | | | | |
| E2 | | 1.3 | 1.3 | 0.8 | 0.3 | 0.3 | 0.3 |
| Antioxidant | | 0.4 | 0.4 | 0.4 | 0.4 | 0.4 | 0.4 |
| UV absorber | | 0.3 | 0.3 | 0.3 | 0.3 | 0.3 | 0.3 |
| Fluidity | | 13 | 13 | 13 | 13 | 11 | 16 |
| Impact strength | | 22 | 22 | 22 | 22 | 28 | 36 |
| Tensile strength | | 41 | 40 | 40 | 40 | 40 | 40 |
| Elongation | | 40 | 40 | 40 | 40 | 40 | 40 |
| Flexural strength | | 67 | 66 | 66 | 66 | 58 | 63 |
| Flexural modulus | | 2010 | 1960 | 1960 | 1960 | 1950 | 1965 |
| Heat deflection temperature | 0.45 MPa | 108 | 108 | 108 | 108 | 110 | 106 |
| | 1.82 MPa | 90 | 88 | 88 | 88 | 89 | 84 |
| Density | | 1.11 | 1.11 | 1.11 | 1.11 | 1.11 | 1.11 |
| ESC test (chemical resistance) | | ○ | ○ | ○ | ○ | ○ | ○ |
| Friction noise properties | 10 N, 1 mm/S | 3 | 3 | 3 | 3 | 3 | 3 |
| | 10 N, 4 mm/S | 2 | 2 | 2 | 2 | 2 | 2 |
| | 40 N, 4 mm/S | 2 | 2 | 2 | 2 | 2 | 2 |
| | 40 N, 4 mm/S | 1.0 | 1.0 | 1.0 | 1.0 | 1.0 | 1.0 |

(continued)

| Classification (content unit: % by weight) | | Examples | | | | | |
|---|---|---|---|---|---|---|---|
| | | 1 | 2 | 3 | 4 | 5 | 6 |
| Light resistance | Glossy specimen | 1.1 | 1.1 | 1.1 | 1.1 | 1.1 | 1.1 |
| | Embossed specimen | 0.9 | 0.9 | 0.9 | 0.9 | 0.9 | 0.9 |
| Injection metering deviation | Average | 13.22 | 13.43 | 15.82 | 17.01 | 17.21 | 17.51 |
| | Standard deviation | 0.94 | 0.92 | 1.14 | 2.22 | 2.43 | 2.52 |

[Table 2]

| Classification (content unit: % by weight) | | Examples | | | |
|---|---|---|---|---|---|
| | | 7 | 8 | 9 | 10 |
| A1 | | | | | |
| A2 | | 29.2 | 28.8 | 27.8 | 27.3 |
| B1 | | 27.0 | 27.0 | 27.0 | 27.0 |
| C1 | | | | | |
| C2 | | 27.0 | 27.0 | 27.0 | 27.0 |
| D1 | | 16.0 | 16.0 | 16.0 | 16.0 |
| E1 | | | | | |
| E2 | | 0.1 | 0.5 | 1.5 | 2.0 |
| Antioxidant | | 0.4 | 0.4 | 0.4 | 0.4 |
| UV absorber | | 0.3 | 0.3 | 0.3 | 0.3 |
| Fluidity | | 13 | 13 | 13 | 13 |
| Impact strength | | 22 | 22 | 22 | 22 |
| Tensile strength | | 41 | 41 | 41 | 41 |
| Elongation | | 40 | 40 | 40 | 40 |
| Flexural strength | | 67 | 67 | 67 | 67 |
| Flexural modulus | | 2010 | 2010 | 2010 | 2010 |
| Heat deflection temperature | 0.45 MPa | 108 | 108 | 108 | 108 |
| | 1.82 MPa | 90 | 90 | 90 | 90 |
| Density | | 1.11 | 1.11 | 1.11 | 1.11 |
| ESC test (chemical resistance) | | ○ | ○ | ○ | ○ |
| Friction noise properties | 10 N, 1 mm/S | 3 | 3 | 3 | 3 |
| | 10 N, 4 mm/S | 2 | 2 | 2 | 2 |
| | 40 N, 4 mm/S | 2 | 2 | 2 | 2 |
| | 40 N, 4 mm/S | 1.0 | 1.0 | 1.0 | 1.0 |
| Light resistance | Glossy specimen | 1.1 | 1.1 | 1.1 | 1.1 |
| | Embossed specimen | 0.9 | 0.9 | 0.9 | 0.9 |
| Injection metering deviation | Average | 18.22 | 14.42 | 12.77 | 12.31 |
| | Standard deviation | 2.94 | 1.34 | 0.84 | 0.74 |

[Table 3]

| Classification (content unit: % by weight) | | Comparative Examples | | | | | | |
|---|---|---|---|---|---|---|---|---|
| | | 1 | 2 | 3 | 4 | 5 | 6 | 7 |
| A1 | | | | | 32.0 | 32.0 | | |
| A2 | | 31.0 | 29.0 | 27.0 | | | 29.2 5 | 23.8 |
| B1 | | 27.0 | 27.0 | 29.0 | 27.0 | 27.0 | 27.0 | 27.0 |
| C1 | | 25.0 | | | | | | |
| C2 | | | 22.0 | 27.0 | 24.0 | 40.0 | 27.0 | 27.0 |
| D1 | | 16.0 | 21.0 | 16.0 | 16.0 | | 16.0 | 16.0 |
| E1 | | 0.3 | 0.3 | 0.3 | 0.3 | 0.3 | | |
| E2 | | | | | | | 0.05 | 5.5 |
| Antioxidant | | 0.4 | 0.4 | 0.4 | 0.4 | 0.4 | 0.4 | 0.4 |
| UV absorber | | 0.3 | 0.3 | 0.3 | 0.3 | 0.3 | 0.3 | 0.3 |
| Fluidity | | 15 | 15 | 11 | 20 | 22 | 13 | 14 |
| Impact strength | | 30 | 29 | 25 | 8 | 18 | 22 | 19 |
| Tensile strength | | 40 | 40 | 40 | 38 | 38 | 41 | 40 |
| Elongation | | 40 | 40 | 40 | 40 | 40 | 40 | 40 |
| Flexural strength | | 61 | 61 | 64 | 63 | 60 | 67 | 67 |
| Flexural modulus | | 1825 | 1805 | 1930 | 1940 | 1870 | 2010 | 1980 |
| Heat deflection temperatur e | 0.45 MPa | 98 | 95 | 107 | 103 | 94 | 108 | 105 |
| | 1.82 MPa | 82 | 85 | 87 | 80 | 76 | 90 | 89 |
| Density | | 1.11 | 1.11 | 1.11 | 1.11 | 1.11 | 1.11 | 1.09 |
| ESC test (chemical resistance) | | ○ | ○ | ○ | ○ | ○ | ○ | X |
| Friction noise properties | 10 N, 1 mm/S | 3 | 3 | 3 | 3 | 3 | 3 | 3 |
| | 10 N, 4 mm/S | 2 | 2 | 2 | 2 | 2 | 2 | 2 |
| | 40 N, 4 mm/S | 2 | 2 | 2 | 2 | 2 | 2 | 2 |
| | 40 N, 4 mm/S | 1 | 1 | 1 | 1 | 1 | 1 | 1 |
| Light resistance | Glossy specimen | 1.1 | 1.1 | 1.1 | 1.1 | 1.1 | 1.1 | 1.1 |
| | Embossed specimen | 1.0 | 1.0 | 1.0 | 1.0 | 1.0 | 1.0 | 1.0 |
| Injection metering deviation | Average | 19.4 1 | 19.1 5 | 19.3 1 | 19.2 2 | 19.2 1 | 19.4 6 | 11.7 7 |
| | Standard deviatio n | 2.53 | 2.61 | 2.56 | 2.62 | 2.59 | 1.34* | 0.68 |
| * During injection, the releasability of an injection-molded article was poor. | | | | | | | | |

As shown in Tables 1 to 3, compared to Comparative Examples 1 to 7 outside the range of the present invention, the thermoplastic resin compositions (Examples 1 to 10) according to the present invention had excellent flexural strength, flexural modulus, heat deflection temperature, noise resistance, and injection moldability while maintaining fluidity, impact strength, tensile strength, and elongation similar to those of the thermoplastic resin compositions of Comparative Examples 1 to 7.

As a notable result, in the case of Examples 1 to 3 and Examples 8 to 10 in which the amide-based lubricant was used within a range of 0.5 to 2.0, an average value of injection metering deviations, which was an indicator of injection processability, was 16 or less, and a standard deviation thereof was 1.3 or less, indicating that injection processability was excellent.

On the contrary, in the case of Comparative Example 6 including less than 0.1 % by weight of the amide-based lubricant according to the present invention, during injection, the releasability of an injection-molded article was poor. In the case of Comparative Example 7 including more than 5 % by weight of the amide-based lubricant according to the present invention, chemical resistance was poor.

In addition, in the case of Comparative Examples 4 and 5 in which a polyester resin having an intrinsic viscosity of 1.0 dl/g was used, impact strength was very poor.

**Claims**

1. A thermoplastic resin composition, comprising a polyester resin (A), a vinyl cyanide compound-conjugated diene compound-aromatic vinyl compound graft copolymer (B), an alpha-methylstyrene-vinyl cyanide compound copolymer (C), a maleimide-based polymer (D), and an amide-based lubricant (E).

2. The thermoplastic resin composition according to claim 1, wherein the thermoplastic resin composition comprises 20 to 40 % by weight of the polyester resin (A), 15 to 30 % by weight of the vinyl cyanide compound-conjugated diene compound-aromatic vinyl compound graft copolymer (B), 20 to 35 % by weight of the alpha-methylstyrene-vinyl cyanide compound copolymer (C), 10 to 20 % by weight of the maleimide-based polymer (D), and/or 0.1 to 5 % by weight of the amide-based lubricant (E).

3. The thermoplastic resin composition according to claim 1 or 2, wherein the polyester resin (A) has an intrinsic viscosity of 1.1 dl/g or more, measured as indicated in the specification.

4. The thermoplastic resin composition according to any one of claims 1 to 3, wherein a weight of the polyester resin (A) is not less than a weight of the vinyl cyanide compound-conjugated diene compound-aromatic vinyl compound graft copolymer (B).

5. The thermoplastic resin composition according to any one of claims 1 to 4, wherein, when injection metering deviations of 30 shots are measured at an injection temperature of 230 °C and a mold temperature of 50 °C using a 600MT injection machine, the thermoplastic resin composition has an average value of injection metering deviations of 18.3 or less.

6. The thermoplastic resin composition according to any one of claims 1 to 5, wherein the thermoplastic resin composition has a light resistance (84 MJ, embossed specimen) of 0.9 or less as measured according to MS210-05.

7. The thermoplastic resin composition according to any one of claims 1 to 6, wherein the polyester resin (A) comprises one or more selected from the group consisting of polyethylene adipate (PEA), polybutylene succinate (PBS), polyethylene terephthalate (PET), polybutylene terephthalate (PBT), polytrimethylene terephthalate (PTT), and polyethylene naphthalate (PEN).

8. The thermoplastic resin composition according to any one of claims 1 to 7, wherein the vinyl cyanide compound-conjugated diene compound-aromatic vinyl compound copolymer (B) is a graft copolymer obtained by graft-polymerizing 10 to 40 % by weight of an aromatic vinyl compound and 1 to 20 % by weight of a vinyl cyanide compound onto 40 to 80 % by weight of conjugated diene rubber.

9. The thermoplastic resin composition according to any one of claims 1 to 8, wherein the alpha-methylstyrene-vinyl cyanide compound copolymer (C) comprises 65 to 85 % by weight of $\alpha$-methylstyrene and 15 to 35 % by weight of a vinyl cyanide compound.

10. The thermoplastic resin composition according to any one of claims 1 to 9, wherein the maleimide-based polymer (D) comprises an N-(substituted) maleimide and an aromatic vinyl compound.

11. The thermoplastic resin composition according to any one of claims 1 to 10, wherein the amide-based lubricant (E) is a fatty acid amide-based lubricant.

12. The thermoplastic resin composition according to any one of claims 1 to 11, wherein the thermoplastic resin composition comprises 0.1 to 5 % by weight of one or more selected from the group consisting of an antioxidant and a UV absorber.

**13.** A method of preparing a thermoplastic resin composition, comprising melt-kneading, and extruding a polyester resin (A), a vinyl cyanide compound-conjugated diene compound-aromatic vinyl compound graft copolymer (B), an alpha-methylstyrene-vinyl cyanide compound copolymer (C), a maleimide-based polymer (D), and an amide-based lubricant (E) at 200 to 300 °C.

**14.** A molded article, comprising the thermoplastic resin composition according to any one of claims 1 to 12.

**Patentansprüche**

**1.** Thermoplastische Harzzusammensetzung, umfassend ein Polyesterharz (A), ein Vinylcyanidverbindung-konjugierte Dienverbindung-aromatische Vinylverbindung-Pfropfcopolymer (B), ein alpha-Methylstyrol-Vinylcyanidverbindung-Copolymer (C), ein Maleimid-basiertes Polymer (D) und ein Amid-basiertes Schmiermittel (E).

**2.** Thermoplastische Harzzusammensetzung nach Anspruch 1, wobei die thermoplastische Harzzusammensetzung 20 bis 40 Gew.-% des Polyesterharzes (A), 15 bis 30 Gew.-% des Vinylcyanidverbindung-konjugierte Dienverbindung-aromatische Vinylverbindung-Pfropfcopolymers (B), 20 bis 35 Gew.-% des alpha-Methylstyrol-Vinylcyanidverbindung-Copolymers (C), 10 bis 20 Gew.-% des Maleimid-basierten Polymers (D) und/oder 0,1 bis 5 Gew.-% des Amid-basierten Schmiermittels (E) umfasst.

**3.** Thermoplastische Harzzusammensetzung nach Anspruch 1 oder 2, wobei das Polyesterharz (A) eine Grenzviskosität von 1,1 dl/g oder mehr aufweist, gemessen wie in der Beschreibung angegeben.

**4.** Thermoplastische Harzzusammensetzung nach einem der Ansprüche 1 bis 3, wobei ein Gewicht des Polyesterharzes (A) nicht weniger als ein Gewicht des Vinylcyanidverbindung-konjugierte Dienverbindung-aromatische Vinylverbindung-Pfropfcopolymers (B) beträgt.

**5.** Thermoplastische Harzzusammensetzung nach einem der Ansprüche 1 bis 4, wobei, wenn Einspritzdosierabweichungen von 30 Schüssen bei einer Einspritztemperatur von 230 °C und einer Formtemperatur von 50 °C unter Verwendung einer 600MT-Einspritzmaschine gemessen werden, die thermoplastische Harzzusammensetzung einen Mittelwert von Einspritzdosierabweichungen von 18,3 oder weniger aufweist.

**6.** Thermoplastische Harzzusammensetzung nach einem der Ansprüche 1 bis 5, wobei die thermoplastische Harzzusammensetzung eine Lichtbeständigkeit (84 MJ, geprägte Probe) von 0,9 oder weniger aufweist, gemessen gemäß MS210-05.

**7.** Thermoplastische Harzzusammensetzung nach einem der Ansprüche 1 bis 6, wobei das Polyesterharz (A) eines oder mehrere umfasst, ausgewählt aus der Gruppe, bestehend aus Polyethylenadipat (PEA), Polybutylensuccinat (PBS), Polyethylenterephthalat (PET), Polybutylenterephthalat (PBT), Polytrimethylenterephthalat (PTT) und Polyethylennaphthalat (PEN).

**8.** Thermoplastische Harzzusammensetzung nach einem der Ansprüche 1 bis 7, wobei das Vinylcyanidverbindung-konjugierte Dienverbindung-aromatische Vinylverbindung-Copolymer (B) ein Pfropfcopolymer ist, erhalten durch Pfropfpolymerisieren von 10 bis 40 Gew.-% einer aromatischen Vinylverbindung und 1 bis 20 Gew.-% einer Vinylcyanidverbindung auf 40 bis 80 Gew.-% konjugierten Dienkautschuk.

**9.** Thermoplastische Harzzusammensetzung nach einem der Ansprüche 1 bis 8, wobei das alpha-Methylstyrol-Vinylcyanidverbindung-Copolymer (C) 65 bis 85 Gew.-% $\alpha$-Methylstyrol und 15 bis 35 Gew.-% einer Vinylcyanidverbindung umfasst.

**10.** Thermoplastische Harzzusammensetzung nach einem der Ansprüche 1 bis 9, wobei das Maleimid-basierte Polymer (D) ein N-(substituiertes) Maleimid und eine aromatische Vinylverbindung umfasst.

**11.** Thermoplastische Harzzusammensetzung nach einem der Ansprüche 1 bis 10, wobei das Amid-basierte Schmiermittel (E) ein Fettsäureamid-basiertes Schmiermittel ist.

**12.** Thermoplastische Harzzusammensetzung nach einem der Ansprüche 1 bis 11, wobei die thermoplastische Harzzusammensetzung 0,1 bis 5 Gew.-% eines oder mehrerer umfasst, ausgewählt aus der Gruppe, bestehend aus einem Antioxidationsmittel und einem UV-Absorber.

13. Verfahren zur Herstellung einer thermoplastischen Harzzusammensetzung, umfassend Schmelzkneten und Extrudieren eines Polyesterharzes (A), eines Vinylcyanidverbindung-konjugierte Dienverbindung-aromatische Vinylverbindung-Pfropfcopolymers (B), eines alpha-Methylstyrol-Vinylcyanidverbindung-Copolymers (C), eines Maleimidbasierten Polymers (D) und eines Amid-basierten Schmiermittels (E) bei 200 bis 300 °C.

14. Formgegenstand, umfassend die thermoplastische Harzzusammensetzung nach einem der Ansprüche 1 bis 12.

**Revendications**

1. Composition résinique thermoplastique comprenant une résine polyester (A), un copolymère greffé composé cyanovinylique-composé diénique conjugué-composé vinylique aromatique (B), un copolymère alpha-méthylstyrène-composé cyanovinylique (C), un polymère à base de maléimide (D) et un lubrifiant à base d'amide (E).

2. Composition résinique thermoplastique selon la revendication 1, où la composition résinique thermoplastique comprend de 20 à 40 % en poids de la résine polyester (A), de 15 à 30 % en poids du copolymère greffé composé cyanovinylique-composé diénique conjugué-composé vinylique aromatique (B), de 20 à 35 % en poids du copolymère alpha-méthylstyrène-composé cyanovinylique (C), de 10 à 20 % en poids du polymère à base de maléimide (D) et/ou de 0,1 à 5 % en poids du lubrifiant à base d'amide (E).

3. Composition résinique thermoplastique selon la revendication 1 ou 2, où la résine polyester (A) a une viscosité intrinsèque égale ou supérieure à 1,1 dl/g, telle que mesurée comme indiqué dans la description.

4. Composition résinique thermoplastique selon l'une quelconque des revendications 1 à 3, où un poids de la résine polyester (A) n'est pas inférieur à un poids du copolymère greffé composé cyanovinylique-composé diénique conjugué-composé vinylique aromatique (B).

5. Composition résinique thermoplastique selon l'une quelconque des revendications 1 à 4 où, quand les déviations de la dose injectée pour 30 pièces produites sont mesurées à une température d'injection de 230 °C et une température du moule de 50 °C en utilisant une machine de moulage par injection de type 600MT, une valeur moyenne des déviations de la dose injectée de la composition résinique thermoplastique est inférieure ou égale à 18,3.

6. Composition résinique thermoplastique selon l'une quelconque des revendications 1 à 5, où la composition résinique thermoplastique a une résistance à la lumière (84 MJ, échantillon gaufré) inférieure ou égale à 0,9, telle que mesurée conformément à la norme MS 210-05.

7. Composition résinique thermoplastique selon l'une quelconque des revendications 1 à 6, où la résine polyester (A) comprend un ou plusieurs sélectionnés dans le groupe consistant en le poly(adipate d'éthylène) (PEA), poly(succinate de butylène) (PBS), poly(téréphtalate d'éthylène) (PET), poly(téréphtalate de butylène) (PBT), poly(téréphtalate de triméthylène) (PTT) et poly(naphtalate d'éthylène) (PEN).

8. Composition résinique thermoplastique selon l'une quelconque des revendications 1 à 7, où le copolymère composé cyanovinylique-composé diénique conjugué-composé vinylique aromatique (B) est un copolymère greffé obtenu par polymérisation par greffage de 10 à 40 % en poids d'un composé vinylique aromatique et de 1 à 20 % en poids d'un composé cyanovinylique sur 40 à 80 % en poids d'un caoutchouc diénique conjugué.

9. Composition résinique thermoplastique selon l'une quelconque des revendications 1 à 8, où le copolymère alpha-méthylstyrène-composé cyanovinylique (C) comprend de 65 à 85 % en poids d'a-méthylstyrène et de 15 à 35 % en poids d'un composé cyanovinylique.

10. Composition résinique thermoplastique selon l'une quelconque des revendications 1 à 9, où le polymère à base de maléimide (D) comprend un maléimide N-substitué et un composé vinylique aromatique.

11. Composition résinique thermoplastique selon l'une quelconque des revendications 1 à 10, où le lubrifiant à base d'amide (E) est un lubrifiant à base d'un amide d'un acide gras.

**12.** Composition résinique thermoplastique selon l'une quelconque des revendications 1 à 11, où la composition résinique thermoplastique comprend de 0,1 à 5 % en poids de un ou plusieurs sélectionnés dans le groupe consistant en un antioxydant et un absorbeur des UV.

**13.** Méthode de préparation d'une composition résinique thermoplastique comprenant le pétrissage à l'état fondu et l'extrusion à 200 à 300 °C d'une résine polyester (A), d'un copolymère greffé composé cyanovinylique-composé diénique conjugué-composé vinylique aromatique (B), d'un copolymère alpha-méthylstyrène-composé cyanovinylique (C), d'un polymère à base de maléimide (D) et d'un lubrifiant à base d'amide (E).

**14.** Article moulé comprenant la composition résinique thermoplastique selon l'une quelconque des revendications 1 à 12.

**REFERENCES CITED IN THE DESCRIPTION**

**Patent documents cited in the description**

- KR 1000334710000 B1

- EP 2955204 A1